# EUROPEAN PATENT SPECIFICATION

(11) **EP 0 813 341 B1**
(45) Date of publication and mention of the grant of the patent: **12.03.2008**
(21) Application number: 97304129.6
(22) Date of filing: 12.06.1997
(51) Int. Cl.: H04N 7/24, H04N 7/64

(54) **Multimedia communication terminal monitoring system**
Überwachungssystem für Multimediakommunikationsendgerät
Système de surveillance pour un terminal de communication multimédia

(30) Priority: 12.06.1996 JP 15051696; 21.06.1996 JP 18116496
(43) Date of publication of application: 17.12.1997
(73) Proprietor: NEC CORPORATION, Tokyo (JP)
(72) Inventor: Hasegawa, Satoshi, Minato-ku, Tokyo (JP)
(74) Representative: Gill, David Alan

(56) References cited:
- US-A- 5 113 400
- PATENT ABSTRACTS OF JAPAN vol. 018, no. 623 (E-1635), 28 November 1994 (1994-11-28) & JP 06 237451 A (HITACHI LTD), 23 August 1994 (1994-08-23) & US 5 528 284 A 18 June 1996 (1996-06-18)

## Description

The present invention relates to a monitoring system for a multimedia communication terminal for reproducing video data delivered through a bi-directional transmission cable, and in particular, though not exclusively to a monitoring system for monitoring the status of the multimedia communication terminal and detecting whether or not an abnormal state has occurred in reproducing the video data.

The provision of video data by way of a bi-directional transmission cable, such as in CATV, has become popular depending upon the diversification of personal or business demands regarding video information. Technical developments relating to an interactive television service called the VOD (Video On Demand) are active at present.

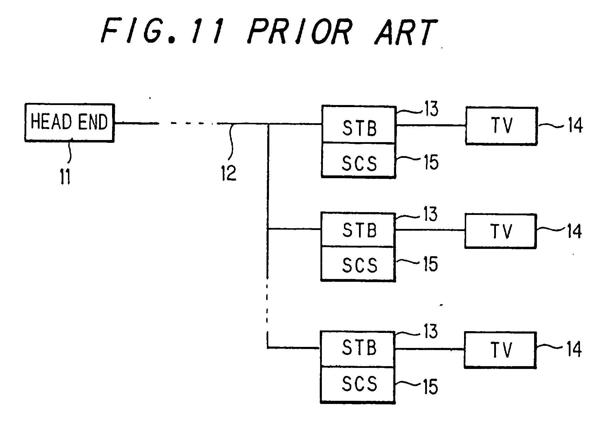

Reference will now be made to Fig. 11 of the accompanying drawings, which is a block schematic diagram illustrating a CATV system which has been proposed in Japanese patent application laid open as a Provisional Publication No. 324784/'92 for realizing the VOD service with simple equipment.

Referring to FIG. 11, there is shown a central system having a so-called head end system 11 at one end of a transmission line 12, each of the other ends of the transmission line 12 being connected to a respective STB (Set Top Box) 13 provided for each of a plurality of video displays 14 of subscribers to the CATV system. The head end system 11, having a recording medium or a video recorder, supplies multimedia data and takes charge of the supply control. Each of the STB's 13 functions as a multimedia communication terminal and is connected to a video display 14 having an interface with the STB. In the CATV system of FIG. 11, there are also provided special channel selectors SCS 15, which are controlled only from the head end system 11 to be tuned to one of the transmission channels to be connected to a special programme channel of a programme selector of the STB 13.

In the CATV system being described, when a subscriber designates a specified programme to be delivered at a specified time, the supplier at the head end system 11 controls remotely the tuning circuit of the SCS 15 to be tuned to a transmission channel through which the specified programme is delivered, so that the subscriber can receive the specified programme by operating the programme selector of the respective STB 13 to the special programme channel connected to the output of the SCS 15.

This is an example of the operation of the VOD system.

There has also been proposed and there is being developed a CATV system called an N-VOD (Near Video On Demand) system. In an N-VOD system, subscribers prior register the programmes and the time zones that they desire to be reserved and the service provider delivers multimedia data of a respective programme in a desired time zone from the head end system through the transmission line to subscribers who reserved the programme in particular the time zone.

There has also been proposed another N-VOD system wherein the head end system delivers multimedia data of the same programme through a plurality of transmission channels, with a certain time difference between each of the plurality of transmission channels, for enabling a subscriber, who intends to receive a programme, to select one of the plurality of the transmission channels where data of the intended programme is to be delivered in his particular time zone.

In these N-VOD systems, the multimedia data are supplied in a certain time zone and the subscriber has to wait for the beginning of the desired programme when he turns on the multimedia communication terminal early and to watch the display in vain.

To avoid this problem, an N-VOD system has been proposed in Japanese patent application laid open as a Provisional Publication No. 250314/'95, wherein a special sub-channel is selected when a subscriber turns on the multimedia terminal and a main channel is designated on which his desired programme is soon to begin. In the special sub-channel, several short programmes are provided and at the time when the desired programme begins in the main channel, the multimedia terminal is controlled to be turned over to the main channel, enabling the subscriber to receive the proposed N-VOD system with little incongruity

In these services, namely either the VOD services or the N-VOD services, the head end system takes charge of the supply control and, in this sense, the service provider is responsible for delivering a good service to each of the subscribers. There may always be a possibility that an abnormal state will occur in the multimedia communication terminal as a result of an unexpected obstacle, even when the remainder of the other equipment is working normally.

Accordingly, an effective method has been proposed for detecting an abnormal state in the multimedia communication terminal and reporting it to the head end system.

In the specification of Japanese patent application laid open as a Provisional Publication No. 45698/'88, there has been proposed a method for detecting an abnormal state from the picture data of a monitor ITV, in which the brightness value of the A/D-converted pixel data of a moving picture frame is compared with that of a picture frame that had existed 0.5 to 1 seconds previously. When the brightness difference between the two picture frames remains within a threshold value for a certain period, it may be decided that an abnormal state has occurred in relation to the monitoring object, in a production robot, for example, which should operate without cease.

In the specification of another Japanese patent application laid open as a Provisional Publication No. 51141/'85, there has been proposed a method for detecting the runaway of software, wherein a runaway watch programme is implemented that periodically interrupts the main programme at a low priority of interruption. When the runaway watch program ends normally, a performance confirmation pulse is generated to be counted by a pulse counter. Another counter counts the number of interruptions programmed to occur in a certain interval. Thus, a software runaway is detected, in the proposed method, by comparing the number of the performance confirmation pulses with the number of interruptions, as no performance confirmation pulse is generated when the runaway watch programme does not end normally.

However, these previously proposed methods for detecting abnormal states are considered to be a little too complicated to be applied widely for detecting an abnormal state of the multimedia communication terminal. Moreover, there may be cases where picture brightness variance remains within the threshold value even when the multimedia communication terminal is operating normally, or cases, on the contrary, where some obstacle is found even when software in the multimedia communication terminal is operating normally.

Furthermore, in N-VOD systems such as those previously described, there may be scheduled interruptions of multimedia data supply, where no picture is reproduced despite there being no abnormal state of the multimedia communication terminals.

Patent Abstracts of Japan Vol. 018, No. 623 (E-1635), 28 November 1994 and JP 06237451A (HITACHI LTD), 23 August 1994 disclose a system for use in a packet switching network to detect packet loss in order to determine whether or not an error has occurred.

US Patent No. 5113400 discloses an error detection system for a discrete receiver where the error detection system is arranged to indicate bad frames of binary information signals which contain distorted bits in densities so great as to cause a convolutional decoder to generate an incorrect decoded signal. A signal decoded by a convolutional decoder is re-encoded by an encoder, and the re-encoded signal is compared with the signal received by the receiver such that when portions of the re-encoded signal differ too greatly from the actual, received signal, a bad frame indication is generated.

Features of a multimedia communication terminal which can detect abnormal reproduction of multimedia data, to be described below, by way of example, in illustration of the invention are that it is comparatively reliable, has a simple configuration, taking into consideration the needs of the user interface as well as of the head end, and is able to discriminate scheduled interruptions of the multimedia data delivery reliably from the abnormal reproduction thereof.

According to a first aspect of the present invention there is provided a monitoring system for a multimedia communication terminal for reproducing multimedia data supplied through a transmission line from a head end system, the monitoring system including,
a decode counter, a count value of the decode counter being incremented each time that video data of a picture frame is decoded from multimedia data delivered through the transmission line by a video decoder provided in the multimedia communication terminal ;
control means for detecting the occurrence of an abnormal state in the multimedia communication terminal by checking for an alteration in the count value during a predetermined interval; and
wherein the control means reads out the count value periodically at a certain interval, and decides that an abnormal state has occurred in the multimedia communication terminal when the count value does not vary during the said predetermined time which is arranged to be greater than two of the said certain intervals.

The following description and drawings disclose, by means of examples, the invention which is characterised in the appended claims, whose terms determine the extent of the protection conferred hereby.

In the drawings:
FIG. 1 is a block schematic diagram illustrating a multimedia communication terminal connected with a head end system,
FIG. 2 is a flowchart illustrating the abnormal state detection routine performed by the CPU 41 of FIG. 1,
FIG. 3 is a flowchart illustrating the operation in the head end system 21 of FIG. 1 receiving a message informing the head end system of the occurrence of an abnormal state,
FIG. 4 is a flowchart illustrating the operation of the multimedia terminal 22 receiving a reply message from the head end system 21,
FIG. 5 is a timing chart illustrating a sequence of controls performed by the CPU 41,
FIG. 6 is a flowchart illustrating a former part of the abnormal state detection routine,
FIG. 7 is a flowchart illustrating the latter part of the abnormal state detection routine of FIG. 6,
FIG. 8 is a flowchart illustrating the onset of the reproduction detection routine performed in the CPU 41,
FIG. 9 is a flow chart illustrating the reproduction ending detection routine, and
FIG. 10 is a flowchart of a part of the abnormal state detection routine performed in still another embodiment.

Now, embodiments illustrative of the present invention will be described by way of example with reference to the accompanying drawings.

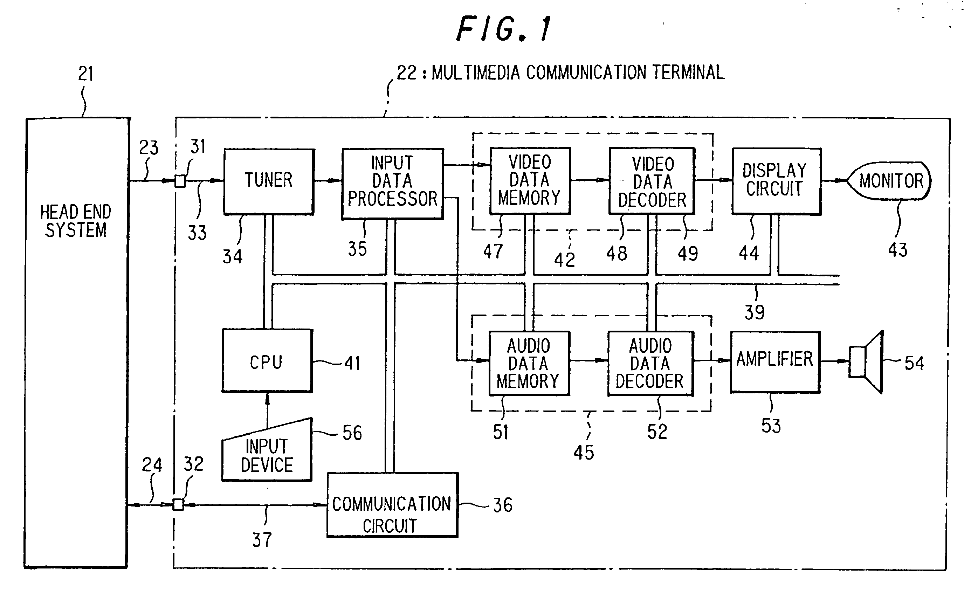

FIG. 1 is a block schematic diagram illustrating a multimedia communication terminal 22 connected with a head end system 21 through a transmission line 23 for delivering multimedia data and a control signal line 24 for exchanging control signals. The head end system 21 is equipped with recording media or a video recorder, supplies multimedia data and takes charge of the supply control as described in connection with the head end system 11 of the previously proposed arrangement described with reference to FIG. 11.

In the arrangement of FIG. 1, the multimedia communication terminal 22 includes a tuner 34 for selecting a desired channel from multimedia data 33 supplied through a data input terminal 31 connected to the transmission line 23, an input data processor 35 for extracting video data and audio data from data of a channel selected by the tuner 34, a video data processing unit 42 having a video data memory 47 for buffering the video data extracted by the input data processor 35 and a video data decoder 48 for decoding the video data buffered in the video data memory 47, a display circuit 44 for generating display signals to be displayed on a monitor 43 according to the video data decoded by the video data processing unit 42, an audio data processing unit 45 having an audio data memory 51 for buffering the audio data extracted by the input data processor 35 and an audio data decoder 52 for decoding the audio data buffered in the audio data memory 51, an amplifier 53 for amplifying the audio data decoded by the audio data processing unit 45 to be output through a speaker 54, a communication circuit 36 for exchanging control signals 37 through a control signal I/O terminal 32 connected to the control signal line 24, a CPU 41 for controlling the tuner 34, the input data processor 35, the communication circuit 36, the video data memory 47, the video data decoder 48, the display circuit 44, the audio data memory 51, the audio data decoder 52, and so on, by way of bus lines 39, and an input device 56 for inputting user's indication to the CPU 41.

To the bus lines 39, there are also connected a ROM (Read Only Memory), a RAM (Random Access Memory), etc., (not shown in the drawings) to be used by the CPU 41. Furthermore, in FIG. 1, there is illustrated, as mentioned above, a multimedia communication terminal 22 having the display circuit 44, the monitor 43, the amplifier 53 and the speaker 54 in its unit. However, the multimedia terminal may be composed of a STB and a video monitor, in a similar way to that described with reference to FIG. 11.

In the embodiment of FIG. 1, a decode counter 49 is also provided in the video data decoder 48.

The decode counter 49 counts the number of pictures decoded by the video data decoder 48, that is, the count value of the decode counter 49 is incremented every time that decoding the data of a picture frame is accomplished in the video decoder 48.

By reading out the count value of the decode counter 49 periodically, the CPU 41 is able to detect the abnormal state of the multimedia communication terminal 22.

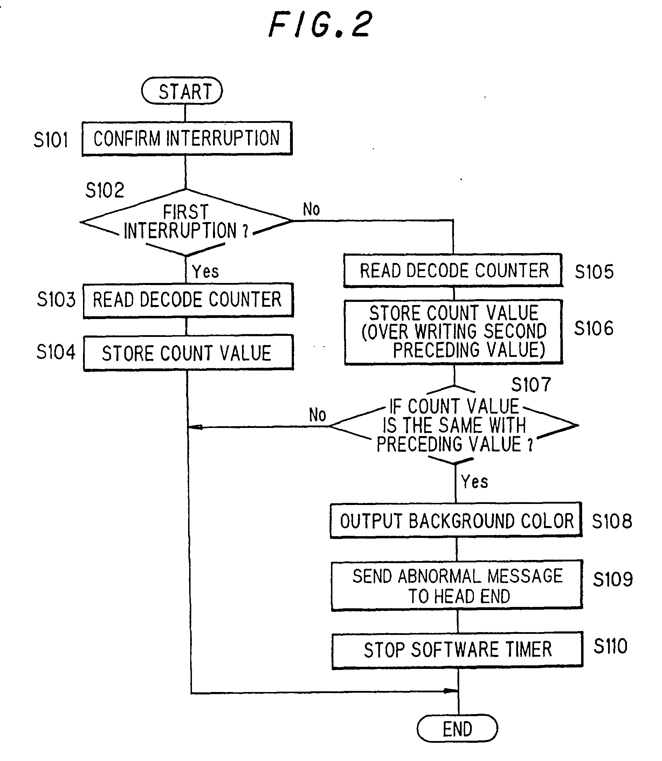

FIG. 2 is a flowchart illustrating the abnormal state detection routine performed by the CPU 41.

The abnormal state detection routine is triggered by a periodical interruption from a software timer, counting a clock signal of the CPU 41, for example.

The interval of the periodical interruption is set to be longer than the processing time needed for decoding the data of at least one picture frame. In this embodiment, the interval is also set to be longer than the time needed from when a reopening request for a multimedia data transmission to be made is sent out from the multimedia communication terminal 22 until when a picture is reproduced from the multimedia data delivered from the head end system 21, after the reopening of multimedia data transmission. The reason will be described below.

When the multimedia communication terminal 22 begins the reproduction of multimedia data, the software timer begins to count up and the CPU 41 is interrupted and changed over to the abnormal state detection routine. The CPU 41 confirms the interruption (at step S1O1) and checks if the interruption is the first interruption after the beginning of the reproduction (at step S102), referring to an interruption register, for example, provided in the RAM, which is cleared at the beginning of every picture reproduction and incremented at every interruption.

When the interruption is the first interruption, the CPU 41 reads out the count value of the decode counter 49 (at step S103) and stores the count value in an area of the RAM (at step S104), ending the abnormal state detection routine for awaiting a second interruption.

When the interruption is not found to be the first interruption (at step S102), the CPU 41 reads out the count value of the decode counter 49 (at step S105) and stores the count value overwriting (at step 106) in the area where the count value read out at the interruption before the preceding interruption is stored. (Therefore, that area is first written when the interruption concerned is the second interruption after the beginning of a reproduction.) Then, the count value concerned is compared (at step S107) with that previously stored in the other area of the RAM read out from the decode counter 49 at the interruption just preceding the interruption concerned.

If the count value concerned differs from the preceding count value, it is confirmed that data of at least one picture have been decoded normally in the interval and the abnormal state detection routine ends.

Should the value of the count concerned be found to be the same as the preceding count value, the CPU 41 decides that some abnormal state has occurred in the multimedia communication terminal 22, controlling the video decoder 48 (at step S108) to output a background color to mask the picture which would otherwise be displayed. Then, the CPU 41 controls the communication circuit 36 (at step S109) to send a message to the head end system 21, the upper system of the multimedia communication terminal 22, informing it of the occurrence of an abnormal state, which is transmitted in the control signals 37 to the head end system 21 by way of the control signal line 24, whereby the abnormal state detection routine ends, the software timer being stopped (at step S110) to suspend any following interruptions.

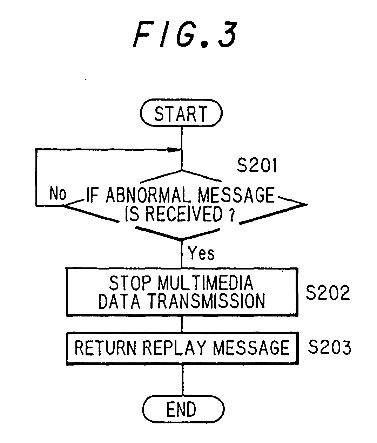

FIG. 3 is a flowchart illustrating the procedure in the head end system 21 for receiving the message informing it of the occurrence of an abnormal state in the multimedia communication terminal 22.

When a control unit (not shown in the drawings) in the head end system 21 receives a message (at step S201) informing the head end system 21 of the occurrence of an abnormal state in a multimedia communication terminal, the multimedia communication terminal 22, for example, the control unit controls the head end system 21 to stop the transmission of the multimedia data 33 to the multimedia communication terminal 22 (at step S202) and returns a reply message thereto (at step S203) through the control signal line 24, informing it of the suspension of the data transmission.

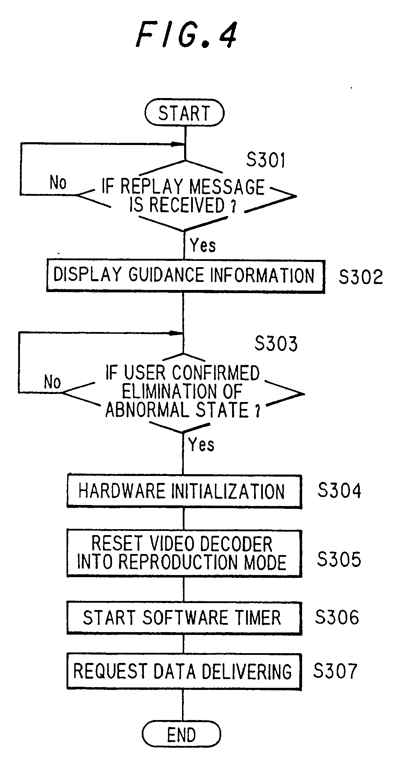

FIG. 4 is a flowchart illustrating the operation of the multimedia terminal 22 receiving the reply message from the head end system 21.

The CPU 41 waits for the reply message (at step S301) after sending out (at step S109 of FIG. 2) the message informing the head end system 21 of the occurrence of an abnormal state, and, when it is received, controls the video data processing unit 42 to display information (at step S302) informing the user that the delivery of data is suspended by the head end system because an abnormal state has occurred in the multimedia communication terminal 22.

The user can confirm the actual state of the multimedia communication terminal 22 from the information displayed, which may include an indication to the user of some probable causes to be checked. According to the indication that the cable connection should be checked, the user can reset the transmission line 23 to the data input terminal 31 when the connection is poor or non-existent, for example.

In the embodiment being described, the CPU 41 waits (at step S303) for a user's key input confirming the elimination of the abnormal state.

When confirmation is received by means of the user's key input that the abnormal state has been eliminated, the CPU 41 initializes the input data processor 35 (at step S304), resets the video decoder 48 into the reproduction mode (at step S305), restarts the software timer (at step S306) and requests the head end to reopen the multimedia data transmission (at step S307).

In this embodiment, the reopening request for the transmission of the multimedia data is sent (at step S307) after starting the software timer (at step S306). This is the reason why the interruption interval of the software timer is set, as previously described, to be longer than the time needed from when the reopening request is sent out until a first picture is reproduced from the multimedia data delivered from the head end system 21.

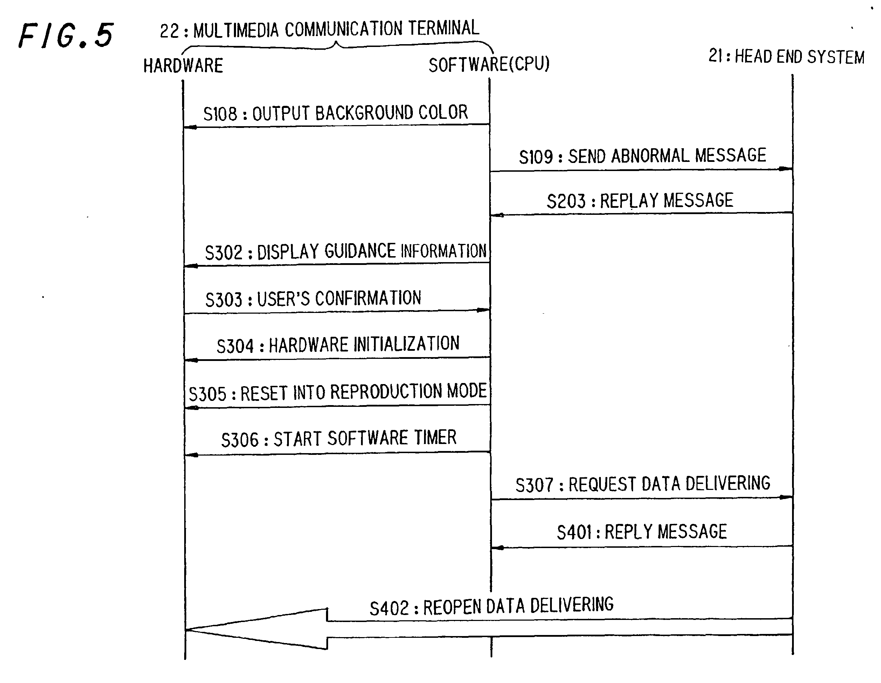

FIG. 5 is a timing chart illustrating the sequence of the controls performed by the CPU 41, namely the software of the multimedia communication terminal 22, in connection with the hardware thereof and the head end system 21. Control steps described with reference to FIGs. 2 to 4 are represented with the same step numbers and any duplicated description is omitted. Replying to the reopening request sent at step 307 from the multimedia communication terminal 22, a confirmation reply is returned (at step S401) from the head end system 21 and the multimedia data supply is reopened (at step S402).

Thus, in this embodiment, an abnormal state of the multimedia communication terminal 22 is detected and reported to the head end system individually, and the data supply is controlled accordingly.

Heretofore, an embodiment has been described in which the multimedia data are reproduced at a normal speed in the multimedia communication terminal 22, but it is easily understood that the embodiment can be applied in the same way when a special reproduction, for example, a slow speed reproduction of the multimedia data are performed.

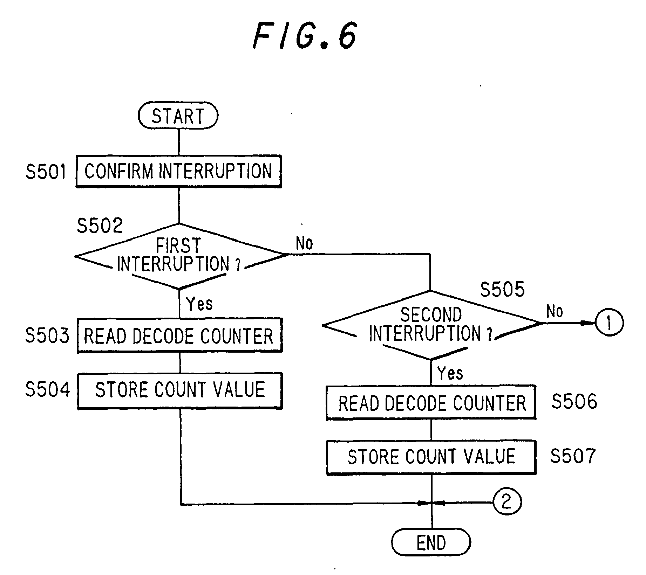

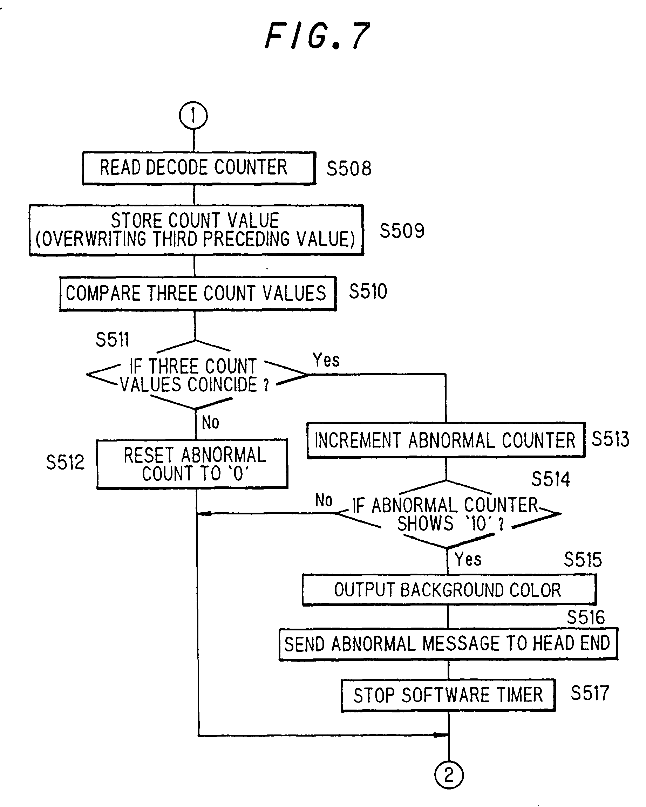

The abnormal state detection routine illustrated in FIG. 2 may be modified as shown in FIGs. 6 and 7, wherein the detection period can be set independent of the interruption interval of the software timer.

FIG. 6 is a flowchart showing the former part of the abnormal state detection routine in another embodiment illustrative of the invention, which is performed in the CPU 41 and which is triggered by the interruption of the software timer in a similar way to that of the embodiment of FIG. 2.

When the multimedia communication terminal 22 begins the reproduction of the multimedia data, the software timer begins to count up and the CPU 41 is interrupted and changed over to the abnormal state detection routine periodically. The CPU 41 confirms the interruption (at step S501) and checks whether or not the interruption is the first interruption after the beginning of the reproduction (at step S502), referring to an interruption register, provided, for example, in the RAM, which is cleared at the beginning of the picture reproduction and incremented at every interruption.

When the interruption is the first interruption, the CPU 41 reads out the count value of the decode counter 49 (at step S503) and stores the count value in an area of the RAM (at step S504), ending the waiting of the abnormal state detection routine for a second interruption.

When the interruption is not found to be the first interruption (at step S502), the CPU 41 checks to see if the interruption concerned is the second interruption (at step S505), in this embodiment. When this is the case, the abnormal state detection routine ends the waiting for the third interruption, storing the count value read out of the decode counter 49 in another area of the RAM (at step S507).

FIG. 7 is a flowchart illustrating the latter part of the abnormal state detection routine performed when the interruption concerned is found to be the third interruption, or after (at step S505 of FIG. 6). In this case, the count value is read out of the decode counter 49 (at step S508) and stored by overwriting (at step 509) in the area where the count value read out at the interruption two times before the preceding interruption has been stored. Therefore, three count values are prepared, corresponding to the interruption concerned, the preceding interruption and the interruption before the preceding interruption, respectively.

Then, the three count values are compared with each other (at step S510) for checking to see if the three count values are the same.

When the three count values are found not to be the same (at step S511), that is, when at least one picture is decoded in three interruption intervals, an abnormal counter, which is also provided in an area of the RAM, is cleared to "0", and the CPU 41 waits for the next following interruption.

When the three count values are found the same, the abnormal counter is incremented (at step S513) and checked to see if after the increment the counter shows a threshold value or not (at step S514). In the example of FIG. 7, the threshold value is set to "10".

When the abnormal counter shows a value smaller than "10", the abnormal detection routine ends without any further action, considering that no picture has been decoded for some intervals, but that it is too early to decide that an abnormal state has occurred.

Should the abnormal counter reach "10", it will be decided by the multimedia communication terminal 22 that an abnormal state has surely occurred. The CPU 41 controls both the video decoder 48 (at step S515) to output a background colour to mask the displayed picture, and the communication circuit 36 (at step S516) to send a message to the head end system 21, the upper system of the multimedia communication terminal 22 informing it of the occurrence of an abnormal state, which is transmitted by the control signals 37 to the head end system 21 by way of the control signal line 24, and the abnormal state detection routine ends, the software timer being stopped (at step S517) for suspending any following interruptions. In the embodiment, the CPU 41 checks if the abnormal counter after the increment shows a threshold value or not (at step S514), so the abnormal state is not checked doubly even if the software timer is left active. When the CPU 41 is programmed to check if after the increment the abnormal counter shows at least the threshold value or not at step S514, it is necessary to suspend the software timer.

In the embodiment shown in FIGs. 6 and 7, the decode counter 49 may be so prepared that it counts-up pulses of the vertical synchronous signal to be used to synchronize the monitor 43, and it is reset at every timing when decoding of the data of a picture frame is accomplished in the video decoder 48. Should the step 511 of FIG. 7 should be so modified that the abnormal counter is reset to "0" when the three count values are found to be the same, and is otherwise incremented at step S513, the steps S514 to S516 follow.

Heretofore, two embodiments of the invention have been described.

The first embodiment described with reference to FIG. 2 is preferably applied to a multimedia communication terminal 22 wherein the interruption interval of the software timer is comparatively long; ten seconds for example. In such a multimedia communication terminal, 300 picture frames should be decoded in an interval of the interruption when 30 picture frames are scheduled to be decoded. So, when the count value of the decode counter 49 does not vary during a ten seconds' interruption interval, it can be decided reasonably surely that an abnormal state has occurred in the multimedia communication terminal 22.

On the other hand, the second embodiment described with reference to FIGs. 6 and 7 is preferably applied to a multimedia communication terminal 22 wherein the interruption interval of the software timer is comparatively short, a half second for example. There may occur some instantaneous interruptions in the transmission line 23. In such a case, that is, when the multimedia data 33 are supplied normally after an instantaneous interruption, it is inconvenient for the user, as well as for the service provider, if the display programme is suspended by deciding that the instantaneous interruption is an abnormal state. Therefore, in the second embodiment, the three count values of the decode counter 49 read out at each three successive interruptions of the software timer are compared, and further, only when the coincidence of the three count values occurs successively more than a threshold number of times, is it decided that the multimedia communication terminal 22 is in an abnormal state. Therefore, even for the multimedia communication terminal 22 wherein an interruption interval of the software timer is comparatively short, can the abnormal state detection be carried out with sufficient reliability, by setting the threshold value appropriately.

Now, there will be described another embodiment illustrative of the invention to be applied in particular to a multimedia communication terminal for reproducing the N-VOD service.

As previously described, there may be a time during which no multimedia data is provided for a subscriber when the subscriber turns on his multimedia communication terminal 22, in the N-VOD service, or there may be scheduled interruptions of the multimedia data supply when the multimedia communication terminal 22 is so controlled that it is tuned to a sub-channel supplying short programmes in such an N-VOD service as has previously been proposed.

Therefore, these scheduled interruptions, where data of no picture frame is decoded, should be distinguished from an abnormal reproduction because of the multimedia communication terminal 22.

For the purpose, a routine for detecting the beginning and the end of a reproduction are also provided in a third embodiment to be described in illustration of the invention.

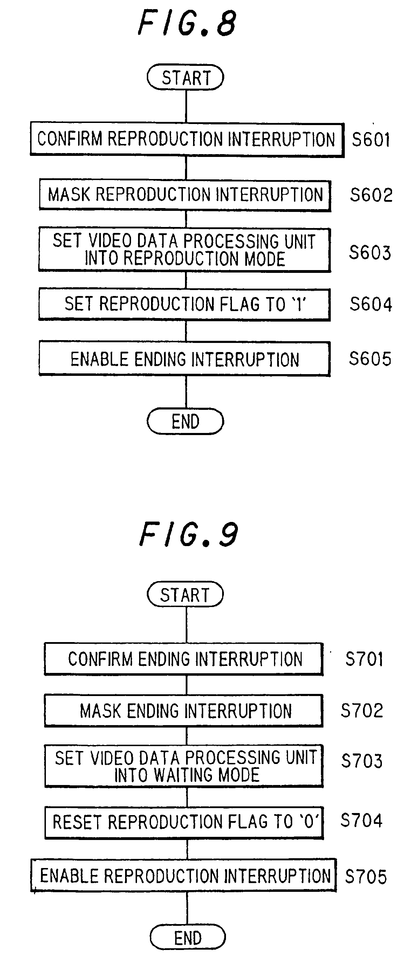

FIG. 8 is a flowchart for illustrating a routine for detecting the beginning of the reproduction in the CPU 41, while a flow chart shown in FIG. 9 illustrates a routine for detecting the ending of the reproduction.

In this embodiment, the reproduction beginning detection routine is triggered by a reproduction interruption generated by the video decoder 48 and supplied to the CPU 41 by way of the bus lines 39 of FIG. 1, when data of a picture are decoded for the first time after the multimedia communication terminal 22 has been activated.

When the reproduction interruption has been confirmed (at step S601) and the beginning detection routine is started, the CPU 41 controls the video decoder 48 to mask, or inhibit from generating, the reproduction interruption (at step 602), setting the video data processing unit 42 into the reproduction mode (at step S603). Then, the CPU 41 sets a reproduction flag to '1' (at step S604) and enables (at step S605) the input signal processor 35 to generate an ending interruption when an end code is detected in the multimedia data 33.

When the input signal processor 35, enabled to generate the ending interruption, receives an end code indicating the termination of a multimedia service, an ending interruption is generated, which is confirmed by the CPU 41 (at step S701) and the reproduction ending detection routine is started. Controlling the input signal processor 35 to mask the ending interruption (at step S702), the CPU 41 sets the video data processing unit 42 into a waiting mode (at step S703) and resets the reproduction flag to '0' (at step S704), and enables the video decoder 48 (at step S705) to generate the reproduction interruption, waiting for the next reopening of the multimedia supply.

Thus, the reproduction status, that is whether video data should be decoded or not, of the multimedia communication terminal 22 can be confirmed in the embodiment whenever by referring to the reproduction flag.

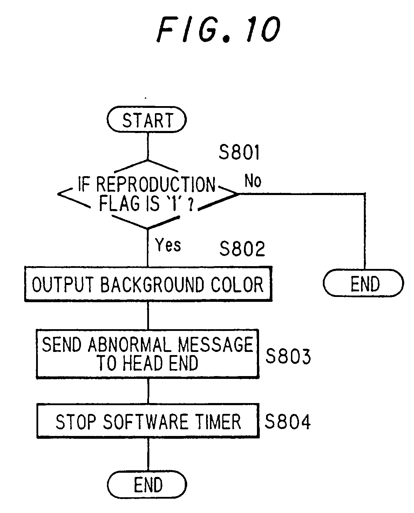

By making use of the reproduction flag, the scheduled interruption of the multimedia data supply can be discriminated as shown in FIG. 10.

FIG. 10 is a flowchart of a part of the abnormal state detection routine performed in the third embodiment, corresponding to steps S108 to S110 of FIG. 2 in the first embodiment and to steps S515 to S517 of FIG. 7 in the second embodiment.

When an abnormal possibility is detected at step S107 of FIG. 2, or at step S514 of FIG. 7, that is, when data of no picture frame is decoded for a period, the CPU 41 checks the reproduction flag (at step S801).

When the reproduction flag is not '1', the abnormal state detection routine of the third embodiment ends without any further action, otherwise, the CPU 41 controls the video decoder 48 (at step S802) to output a background colour to mask the displayed picture. Then, the CPU 41 controls the communication circuit 36 (at step S803) to send a message to the head end system 21, the upper system of the multimedia communication terminal 22, informing it of the occurrence of an abnormal state, stopping the software timer (at step S804).

In connection with FIG. 10, an application of the reproduction flag for discriminating the scheduled interruption of the multimedia supply from the abnormal state in the multimedia communication terminal 22 is described.

However, the reproduction flag, namely, the reproduction status detection itself can be applied in various ways. For example, it may be transmitted to the head end system 21 through the control signal line 24 to be referred to by a fare account system in the head end system 21, or an appropriate guidance to the user may be displayed on the monitor 43 when the reproduction flag is '0'.

It will be understood that although particular embodiments illustrative of the invention have been described, by way of example, variations and modifications thereof, as well as other embodiments may be made within the scope of the appended claims.

## Claims

1. A monitoring system for a multimedia communication terminal (22) for reproducing multimedia data supplied through a transmission line from a head end system, the monitoring system including
a decode counter (49), a count value of the decode counter (49) being incremented each time that video data of a picture frame is decoded from multimedia data delivered through the transmission line (23) by a video decoder (48) provided in the multimedia communication terminal (22);
control means (41) for detecting the occurrence of an abnormal state in the multimedia communication terminal (22) by checking for an alteration in the count value during a predetermined interval; and
wherein the control means (41) reads out the count value periodically at a certain interval, and decides that an abnormal state has occurred in the multimedia communication terminal (22) when the count value does not vary during a predetermined time which is arranged to be greater than two of the said certain intervals.

2. A monitoring system as claimed in claim 1 including a communication circuit (36), the communication circuit (36) being controlled by the control means (41) to send an abnormal message to the head end system (21) requesting that the delivery of the multimedia data to the multimedia communication terminal (22) be suspended when the abnormal state is detected.

3. A monitoring system as claimed in claim 1, including
a video data processing unit (42), the video data processing unit (42) being controlled by the control means (41) to generate display data for informing a user of the abnormal state when the abnormal state is detected, and
a communication circuit (36), the communication circuit (36) being controlled by the control means (41) to send an abnormal message to the head end system (21) requesting that the delivery of the multimedia data to the multimedia communication terminal (22) be suspended when the abnormal state is detected, and that a reopening request be sent to the head end system (21) requesting that the delivery of the multimedia data to the multimedia communication terminal (22) be reopened when it is confirmed that the abnormal state has been eliminated.

4. A monitoring system as claimed in claim 1, wherein the control means (41) reads out the count value periodically at a certain interval, and decides that an abnormal state has occurred in the multimedia communication terminal (22) when the count value does not vary during the certain interval.

## Patentansprüche

1. Überwachungssystem für einen Multimedia-Kommunikationsterminal (22) zum Wiedergeben von Multimedia-Daten, die von einem Kopfstellensystem über eine Übertragungsleitung zugeführt werden, wobei das Überwachungssystem Folgendes umfasst:
einen Decode-Zähler (49), wobei ein Zählwert des Decode-Zählers (49) jedes Mal inkrementiert wird, wenn Videodaten eines Bildrahmens von Multimedia-Daten decodiert werden, die von einem in dem Multimedia-Kommunikationsterminal (22) vorgesehenen Videodecoder (48) über die Übertragungsleitung (23) zugeführt werden;
ein Steuermittel (41) zum Erkennen des Auftretens eines anormalen Zustands in dem Multimedia-Kommunikationsterminal (22) durch Prüfen auf eine Änderung des Zählwertes im Laufe eines vorbestimmten Intervalls; und
wobei das Steuermittel (41) den Zählwert periodisch in einem bestimmten Intervall ausliest und entscheidet, dass ein anormaler Zustand in dem Multimedia-Kommunikationsterminal (22) aufgetreten ist, wenn der Zählwert während einer vorbestimmten Zeit, die so gewählt wird, dass sie größer ist als zwei der genannten bestimmten Intervalle, nicht variiert.

2. Überwachungssystem nach Anspruch 1 mit einer Kommunikationsschaltung (36), wobei die Kommunikationsschaltung (36) von dem Steuermittel (41) so gesteuert wird, dass sie eine Anormal-Nachricht zum Kopfstellensystem (21) sendet, die eine Unterbrechung der Zuführung der Multimedia-Daten zu dem Multimedia-Kommunikationsterminal (22) fordert, wenn der anormale Zustand erkannt wird.

3. Überwachungssystem nach Anspruch 1, das Folgendes umfasst:
eine Videodatenverarbeitungseinheit (42), wobei die Videodatenverarbeitungseinheit (42) von dem Steuermittel (41) so gesteuert wird, dass sie Anzeigedaten zum Informieren eines Benutzers über den anormalen Zustand erzeugt, wenn der anormale Zustand erkannt wird, und
eine Kommunikationsschaltung (36), wobei die Kommunikationsschaltung (36) von dem Steuermittel (41) so gesteuert wird, dass sie eine Anormal-Nachricht zum Kopfstellensystem (21) sendet, die eine Unterbrechung der Zuführung der Multimedia-Daten zu dem Multimedia-Kommunikationsterminal (22) fordert, wenn der anormale Zustand erkannt wird, und das Senden einer Wiederaumahmeanfbrderung zum Kopfstellensystem (21) fordert, die die Wiederaufnahme der Zuführung der Multimedia-Daten zu dem Multimedia-Kommunikationstermianl (22) fordert, wenn bestätigt wird, dass der anormale Zustand behoben wurde.

4. Überwachungssystem nach Anspruch 1, wobei das Steuermittel (41) den Zählwert periodisch in einem bestimmten Intervall ausliest und entscheidet, dass ein anormaler Zustand in dem Multimedia-Kommunikationsterminal (22) aufgetreten ist, wenn der Zählwert im Laufe des bestimmten Intervalls nicht variiert.

## Revendications

1. Un système de surveillance d'un terminal de communication multimédia (22) destiné à la reproduction de données multimédias fournies par l'intermédiaire d'une ligne de transmission à partir d'un système de tête de réseau, le système de surveillance comprenant :
un compteur de décodage (49), une valeur de comptage du compteur de décodage (49) étant incrémentée chaque fois que des données vidéo d'une trame d'image sont décodées à partir de données multimédias remises par l'intermédiaire de la ligne de transmission (23) par un décodeur vidéo (48) fourni dans le terminal de communication multimédia (22),
un moyen de commande (41) destiné à détecter la survenue d'un état anormal dans le terminal de communication multimédia (22) par la recherche d'une modification de la valeur de comptage au cours d'un intervalle de temps prédéterminé, et
où le moyen de commande (41) consulte la valeur de comptage périodiquement à un intervalle de temps donné et décide qu'un état anormal s'est produit dans le terminal de communication multimédia (22) lorsque la valeur de comptage ne varie pas au cours d'une durée prédéterminée qui est définie de façon à être supérieure à deux desdits intervalles de temps donnés.

2. Un système de surveillance selon la Revendication 1 comprenant un circuit de communication (36), le circuit de communication (36) étant commandé par le moyen de commande (41) de façon à envoyer un message d'état anormal au système de tête de réseau (21) demandant que la remise des données multimédias au terminal de communication multimédia (22) soit suspendue lorsque l'état anormal est détecté.

3. Un système de surveillance selon la Revendication 1, comprenant :
une unité de traitement de données vidéo (42), l'unité de traitement de données vidéo (42) étant commandée par le moyen de commande (41) de façon à générer des données d'affichage destinées à informer un utilisateur de l'état anormal lorsque l'état anormal est détecté, et
un circuit de communication (36), le circuit de communication (36) étant commandé par le moyen de commande (41) de façon à envoyer un message d'état anormal au système de tête de réseau (21) demandant que la remise de données multimédias au terminal de communication multimédia (22) soit suspendue lorsque l'état anormal est détecté, et qu'une demande de réouverture soit envoyée au système de tête de réseau (21) demandant que la remise des données multimédias au terminal de communication multimédia (22) soit rouverte lorsqu'il est confirmé que l'état anormal a été supprimé.

4. Un système de surveillance selon la Revendication 1, où le moyen de commande (41) consulte la valeur de comptage périodiquement à un intervalle de temps donné et décide qu'un état anormal s'est produit dans le terminal de communication multimédia (22) lorsque la valeur de comptage ne varie pas au cours de l'intervalle de temps donné.
